## Europäisches Patentamt

## European Patent Office

## Office européen des brevets

(11) Veröffentlichungsnummer: **0 404 999 B1**

# EUROPÄISCHE PATENTSCHRIFT

(45) Veröffentlichungstag der Patentschrift: **16.12.92**

(51) Int. Cl.5: **B09B 1/00**, E02D 31/00

(21) Anmeldenummer: **89111993.5**

(22) Anmeldetag: **30.06.89**

(54) Verfahren zur Herstellung einer Abdichtung bei Deponien oder dergleichen.

(43) Veröffentlichungstag der Anmeldung:
**02.01.91 Patentblatt 91/01**

(45) Bekanntmachung des Hinweises auf die
Patenterteilung:
**16.12.92 Patentblatt 92/51**

(84) Benannte Vertragsstaaten:
**AT BE CH DE ES FR GB GR IT LI LU NL SE**

(56) Entgegenhaltungen:
**EP-A- 0 274 564**
**WO-A-89/01547**
**DE-A- 3 444 895**
**DE-A- 3 629 768**
**DE-C- 3 151 680**

**MÜLL UND ABFALL, Band 20, No. 7, Juli 1988,**
**Seiten 281-295, Berlin, DE; J. DRESCHER:**
**"Deponiedichtungen für Sonder-**
**abfalldeponien - Arbeitspapier"**

(73) Patentinhaber: **Kügler, Jost-Ulrich**
**Im Teelbruch 61**
**W-4300 Essen 18(DE)**

(72) Erfinder: **Kügler, Jost-Ulrich**
**Im Teelbruch 61**
**W-4300 Essen 18(DE)**

(74) Vertreter: **Dost, Wolfgang,**
**Dr.rer.nat.,Dipl.-Chem. et al**
**Patent- & Rechtsanwälte Bardehle . Pagen-**
**berg . Dost . Altenburg . Frohwitter . Geissler**
**& Partner Galileiplatz 1 Postfach 86 06 20**
**W-8000 München 86(DE)**

**Beschreibung**

Im Zuge des allgemeinen Umweltschutzes werden an Abdichtungen für Deponien und Altlasten immer höhere Anforderungen zum Schutze des Untergrundes und des Grundwassers gestellt. Bekannt ist eine Bodenabdichtung mit Folien oder mit mineralischen Erdstoffen z. B. mit Lehm, tonhaltigem Lehm oder Ton. Werden Folien auf Böschungen aufgelagert, erhalten sie beidseitig eine Rauhigkeit durch Riffelung. Wird Lehm auf mit Folien abgedichteten Böschungen aufgetragen, müssen zusätzlich über die Riffelung hinaus Noppen aufgeschweißt werden, um den Lehm und die Folie, je nach Böschungsneigung, gegen Abrutschen auf der Folie zu sichern.

Bei doppelter Abdichtung wird zunächst eine mineralische Abdichtungsschicht in unterschiedlicher Mächtigkeit je nach Anforderung aufgetragen und diese dann mit Folien überdeckt. Die mineralische Abdichtungsschicht muß eine möglichst hohe Plastizität erhalten, um Rißbildungen weitgehend unterdrükken zu können. Durch neuere Untersuchungen (Deponieaufgrabungen) wurde festgestellt, daß unter Folien liegende mineralische Abdichtungen zur Austrocknung neigen. Insbesondere bei stark tonhaltigen mineralischen Abdichtungen kann dies zu Rißbildungen führen.

Bei stark setzungsgefährdeten Untergründen, wie z.B. beim Auftragen von mineralischen Abdichtungsschichten auf Altdeponien, müssen erhebliche Untergrundverbesserungen vorgenommen werden, um durch unterschiedliche Setzungen bzw. Sackungen der Deponieschüttung bedingte Rißbildungen an der mineralischen Abdichtungsschicht zu mindern. Hierzu werden dann neben intensiven Tiefenverdichtungen mit Kiespfählen hochscherfeste Tragschichten unter der mineralischen Abdichtungsschicht angeordnet, um im Auflagebereich ein möglichst gleiches Setzungsverhalten zu erreichen. Trotz dieser Maßnahmen können Setzungsrisse nicht ausgeschlossen werden, da die Setzungen und Sackungen der alten Deponieschüttungen lastunabhängig aufgrund unterschiedlicher Lagerungen entstehen. Hinzu kommen Bewegungen aus Verrottung und Schrumpfung durch den Austrocknungseffekt der Oberflächendichtung. Das gleiche gilt für setzungsempfindliche Untergründe bei Deponiebasisabdichtungen unter hoher Auflast.

Um einen ausreichenden Schutz gegen eindringendes Oberflächenwasser bei Oberflächendichtungen und gegen Deponiewasser bei Basisabdichtungen zu erhalten, wird deshalb gefordert, die Abdichtungsschicht unter einem Mindestgefälle von 3 bis 5 % unter Berücksichtigung der Setzungen und Sackungen auszubilden, damit das aufgefangene Wasser schnell abläuft. Aufgrund der zu erwartenden Verformungen müssen deshalb wesentlich höhere Gefälle vorgesehen werden, was sehr hohe Kosten hinsichtlich der Profilierung des Erdplanums erfordert.

Bei Oberflächen- oder Deckeldichtungen wird im allgemeinen auf die mineralische Abdichtungsschicht zur Ableitung des Sicker- oder Oberflächenwassers vom Oberboden oder Kulturboden ein durchgehendes Flächenfilter, z. B. Kies, Kiessand oder Filtermatten, aufgebracht. Bei Deckeldichtungen besteht deshalb wegen der schnellen Entwässerung die Gefahr, daß nach längeren Trockenperioden die mineralische Abdichtungsschicht unter dem Kulturboden und dem Flächenfilter so weit austrocknet, daß Schrumpfrisse entstehen. Dies gilt insbesondere für Deckeldichtungen aus Ton oder Lehm, oder aus anderen künstlichen Gemischen, z. B. aus Haldenmaterial mit Zusätzen von Flotationsschlamm und Bentonit, oder aus Mineralgemisch mit Zusätzen von Bentonit. Darüber hinaus kann es aufgrund von Setzungen und Sackungen der Deponieschüttung zu weitaus stärkerer Rißbildung kommen, die bis zur völligen Zerstörung der Abdichtungswirkung führen kann, so daß die Deponie nicht mehr funktionssicher ist.

Wegen des gestiegenen Umweltbewußtseins und aufgrund der Tatsache, daß es insbesondere bei Altdeponien wegen mangelhafter oder fehlender Basisdichtungen durch Eindringen des Oberlfächenwassers zum Auslaugen von Schadstoffen und damit einer Grundwassergefährdung kommt, hat man die Qualitätsanforderungen an Deckeldichtungen von Deponien zunehmend verschärft und die Qualitätsanforderungen denen von Basisdichtungen gleichgesetzt. Dies erfordert bei den herkömmlichen mineralischen Deckeldichtungen immer größere Schichtdicken, was entsprechende Kosten mit sich bringt.

Aus dem Erd- und Grundbau ist es bekannt, Geotextilien, d. h. wasserdurchlässige Fließstoffe oder Gewebe, unter Dämmen auf weiche Bodenschichten aufzulegen. Hierdurch wird das partielle Einsinken der Dammschüttung in den weichen Untergrund bzw. Böschungsbrüche oder stark unterschiedliche Setzungen verhindert. Weitere Anwendungen für Geotextilien sind in "Merkblatt für die Anwendung von Geotextilien im Erdbau" Ausgabe 1987, Forschungsgesellschaft für Straßen- und Verkehrswesen, Arbeitsgruppe Erd- und Grundbau, Alfred-Schütte Allee 10, 5000 Köln 21 beschrieben. Weiterhin ist im Deponiebau die Verwendung von Geotextilien für Trenn- und Schutzschichten bekannt.

Aus der EP-B-0 141 039 ist ein gelbildendes Gemisch aus Alkalimetallsilikat, Wasser, einem oder mehreren Trialkoxysilanen und einem sauren Alkalimetall- oder Ammoniumphosphat als Mittel zur Einstellung der Gelzeit bekannt. Das gelbildende Gemisch wird in durchlässige, rollige Böden injiziert, wodurch diese abgedichtet und stabilisiert werden.

Die DE-A-3 629 768 beschreibt wasserhaltige abbindbare Stoffgemische zur Verwendung als Baustoff bei der Erstellung von Bauelementen, insbesondere von Dichtwänden auf der Basis von gelbildenden Gemischen, die einen Gehalt an Zuschlagstoffen mit hohlraumarmer Kornzusammensetzung entsprechend den vorgeschriebenen Zuschlagstoff-Sieblinlen-Bereichen nach DIN 1045 aufweisen. Als gelbildende Gemische dienen solche aus Alkalimetallsilikat, Wasser und Trialkoxysilan, wobei zusätzlich ein Mittel zur Einstellung der Gelzeit enthalten ist. Als abbindbare Inhaltsstoffe dienen Wasserglas und/oder organische Bindemittel, wie Polyesterharze, und/oder hydraulische Bindemittel, wie Zementgele.

Aus Müll- und Abfall 7 (1988) 281 bis 295 sind Abdichtungssysteme bekannt, bei denen zum Schutz von Kunststoffolienbahnen oder zur Verhinderung der Verstopfung der Drainagen durch Bodenmaterial Glasfaservliesstoffmatten Verwendung finden.

Schließlich ist aus der EP-A-0 274 564 ein Verfahren bekannt, wo bei der Abdichtung von Deponien mit doppellagigen Kunststoffolien zwischen den Folienbahnen eine Geotextil-Vliesmatte vorgesehen ist, die mit Bentonitmehl abgestreut ist, das im Falle einer beide Kunststoffolien durchdringenden Leckage geringen Querschnitts die Öffnung in der unteren Kunststoffolienlage zuschwemmen soll. In einer besonderen Ausführungsform ist hierbei der gesamte Zwischenraum zwischen den beiden Kunststofflagen mit Bentonitmehl ausgefüllt, so daß eine Ausbreitung des Leckagewassers zwischen den Kunststofflagen verhindert wird.

Trotz der vorbeschriebenen Maßnahmen war es jedoch bis heute nicht möglich, Abdichtungen und insbesondere Deckeldichtungen von Deponien so herzustellen, daß sie trotz der mehr oder weniger unvermeidbar auftretenden Risse auf Dauer funktionsfähig bleiben. Hieraus ergibt sich unmittelbar die Aufgabe der Erfindung.

Gegenstand der Erfindung ist somit ein Verfahren gemäß Patentanspruch 1 und ein Verfahren gemäß Patentanspruch 13.

Beim Verfahren der Erfindung kommt der Fließbodenschicht die Funktion zu, daß beim Auftreten eines Schwund- oder Setzrisses an unvorhergesehener Stelle in der Abdichtungsschicht durch die Fließbodenschicht ablaufendes Sickerwasser Fließbodenmaterial in den Riß der Abdichtungsschicht transportiert und diesen schließlich zusetzt. Es handelt sich hier sozusagen um eine Selbstreparatur der Dichtungsschicht, wodurch auf Dauer eine einwandfreie Dichtigkeit gewährleistet ist, da sich die Selbstreparatur wiederholen kann.

Bei den fließenden Bodenarten der Klasse 2 nach DIN 18300 handelt es sich im einzelnen um

(2) feinkörnige Böden sowie organogene Böden und Böden mit organischen Beimengungen der Gruppen OU, OT, OH und OK, wenn sie eine breiige oder flüssige Konsistenz ($I_c \leq 0,5$) haben; oder

(3) gemischtkörnige Böden mit einem Anteil an Korn unter 0,063 mm von mehr als 15 Gew.-%; das sind Böden der Gruppe $S\overline{U}$, $S\overline{T}$, $G\overline{U}$ und $G\overline{T}$, wenn sie eine breiige oder flüssige Konsistenz haben.

Bei dem Buchstabencode handelt es sich um Bodengruppen nach DIN 18 196. Unter die Bodengruppen OU und OT fallen z. B. auch Klärschlämme und Gewässerschlämme. Weitere geeignete Bodengruppen sind TU und TL.

Die Bodenarten der Klasse 2 (2) enthalten gegenüber den Bodenarten der Klasse 2 (3) mehr Feinanteile, die für die Abdichtung der Risse von Bedeutung sind. Andererseits besitzen die Böden der Klasse 2 (3) unter Einwirkung von Sickerwasser eine leichtere Fließfähigkeit, was für die Heranführung von Abdichtungsmaterial für die Abdichtung entstehender Risse, insbesondere bei lokaler Rißhäufung, auch von weiter entfernt liegenden Stellen der Fließbodenschicht von großer Bedeutung ist.

Aufgrund des dargelegten Sachverhalts werden erfindungsgemäß vorzugsweise solche Bodenarten ausgewählt, die sowohl einen hohen Feinanteil als auch eine gute Fließfähigkeit unter Einfluß von Sickerwasser besitzen.

Aus dem vorstehenden wird deutlich, daß die fließenden Bodenarten der Klasse 2 nach DIN 18.300 bereits mit dieser Eigenschaft vorliegen, während die erfindungsgemäß verwendeten Fließbodenschichten die Fließeigenschaften erst unter dem Einfluß des Sickerwassers erhalten. Insbesondere wird bei der praktischen Durchführung des Verfahrens der Erfindung die Fließbodenschicht in einen Zustand eingebaut, in dem sie - mangels ausreichenden Wassergehalts - keine Fließeigenschaften nach DIN 18.300 besitzt, sondern diese Fließeigenschaften vielmehr erst unter dem Einfluß des ablaufenden Sickerwassers, in erster Linie aus Niederschlägen erhält. Somit handelt es sich bei der erfindungsgemäß aufzubringenden Fließbodenschicht um ein Bodenmaterial, das unter Wasserzufuhr Fließeigenschaften nach Klasse 2 der DIN 18.300 annimmt.

In dem ebengenannten Sinne wird bei der Durchführung des Verfahrens der Erfindung vorzugsweise darauf geachtet, daß man Fließböden mit einer breiten Korngrößenverteilung verwendet, die als Gemische von Bodenarten der Klassen 2 (2) und 2 (3) angesehen werden können, wobei die Bedingung $I_c \leq 0,5$ ($I_c$ = Konsistenzzahl nach Atterberg) erfüllt ist.

Erfindungsgemäß sind Tonböden wegen der fehlenden Fließeigenschaften ungeeignet. Andererseits besitzen Tone jedoch sehr gute Abdichtungseigenschaften. In einer besonders bevorzugten Ausführungsform des Verfahrens der Erfindung wird deshalb dem verwendeten Fließboden ein gewisser Tonanteil zugesetzt. Vorzugsweise werden hierzu nicht-quellende Tonmineralien verwendet, wobei z. B. 3 - 10 Gew.-% Tonmineral verwendet werden. Bei höheren Tongehalten besteht die Gefahr, daß die Fließeigenschaften verloren gehen, weshalb ein Tongehalt von 15 Gew.-% bereits kritisch sein kann, insbesondere wenn die Tonmineralien noch eine gewisse Quellbarkeit besitzen.

Eine Rahmenrezeptur für die erfindungsgemäß verwendeten Fließböden ist der folgenden Tabelle I zu entnehmen:

Tabelle I

| Bestandteil | Gew.-% | Korngröße, mm |
|---|---|---|
| Ton | 5 - 15 | 0,001 - 0,002 |
| Schluff | 35 - 25 | 0,002 - 0,063 |
| Feinsand | 45 - 55 | 0,063 - 0,2 |
| Mittelsand und Grobsand | 15 - 5 | 0,2 - 1,0 |

Zur Herstellung dieser Fließböden dienen z. B. natürlich vorkommender Lößlehm, dessen Sandgehalt bestimmt wird, wobei die fehlenden Sandbestandteile und Tonmineralien aus Handelsprodukten zugemischt werden. Bei demverwendeten Ton handelt es sich z. B. um gemahlene Abbruchziegel oder um gebrannten Ton (Tonmehl) oder um gemahlenes Kaolinit oder Calciumbentonit. Bei allen körnigen Bestandteilen wird vorzugsweise auf rundes Korn - im Gegensatz zu gebrochenem Korn - geachtet.

Ein weiteres Beispiel für die Herstellung eines erfindungsgemäß geeigneten Fließbodens besteht in der Verwendung von Klärschlamm oder Gewässerschlamm, wobei die fehlenden Sand- und Tonbestandteile aus Handelsprodukten zugemischt werden können Vorzugsweise liegt hierbei der Tongehalt unter 10 Gew.-%, da andernfalls die Fließeigenschaften ungenügend sind.

Für den Einbau der Fließbodenschicht spielt an sich der Feuchtigkeitsgehalt keine besondere Rolle. Da jedoch bei der Durchführung des Verfahrens in der Praxis die Fließbodenschicht üblicherweise mit gängigen Erdbaugeräten ausgebracht und planiert wird, liegt der Wassergehalt vorzugsweise im trockenen Bereich der Proctorkurve des Fließbodengemisches, was einem Wassergehalt von 10 - 20 % bei den Böden der Tabelle I und einem wesentlich höheren Wassergehalt bei Verwendung von Schlämmen, z. B. bis 50 Gew.-% oder sogar darüber entspricht. Es besteht jedoch auch die Möglichkeit, die Fließboderschicht mit wesentlich höherem Wassergehalt unter Verwendung eines Fertigers, wie er im Straßenschwarzbau Verwendung findet, aufzubringen. Diese Arbeitsweise ist zu bevorzugen, wenn der Wassergehalt der Ausgangsstoffe relativ hoch liegt.

Bei der Herstellung von Deckeldichtungen für Deponien wird die Deckeldichtung im allgemeinen von einer Filterschicht und Kulturboden überlagert. Hierbei ist darauf zu achten, daß die unmittelbar auf der Fließbodenschicht aufliegende Filterschicht filterfest ist, d. h. daß aus der Filterschicht keine Feinstanteile von unten in die Filterschicht eindringen. Dies läßt sich durch gezielte Kornabstufung der Filterschicht bzw. durch Einlegen einer Filterfließmatte erreichen.

Die Dicke der Fließbodenschicht unterliegt an sich keinen besonderen Beschränkungen. In der Praxis hat sich gezeigt,daß die Mindestdicke etwa 3 oder 4 cm beträgt, wobei die Obergrenze u. a. dadurch bestimmt wird, wieviel Fließbodenmaterial für eventuell widerholt auftretende Risse zur Verfügung stehen muß, um eine zuverlässige Abdichtung zu gewährleisten. Fließbodendicken von über 15 cm sind im allgemeinen nicht erforderlich, wobei in der Praxis Dicken von 5 - 10 cm angezeigt sind.

Erfindungsgemäß wird in der Abdichtungsschicht eine Geotextilgewebematte eingebaut. Hierbei wird die Durchlässigkeit der Textilgewebematte so gewählt, daß die Korngrößen ab Feinsandbestandteil und gröber des Fließbodens zurückgehalten werden. Auf diese Weise wird bei der Selbstreparatur von Rißbildungen das genannte Fließbodenmaterial von der Textilgewebematte festgehalten. Da darüber hinaus die Sedimentation im Riß nach Maßgabe der Korngröße zeitverzögert erfolgt, werden nachfolgende feinere Fraktionen von bereits auf Gewebematte befindlichem Sandmaterial festgehalten Erfindungsgemäß werden keine Vliesstoffmatten, sondern Gewebematten verwendet, um eine unerwünschte horizontale Dränierung auszuschließen. Vorzugsweise werden möglichst dünne Textilgewebe mit geringer Dehnfähigkeit verwendet, wobei Gewebe mit hoher Oberflächenrauhigkeit, z. B. mit aufstehenden Gewebefasern bevorzugt sind. Vorzugsweise besitzen diese Gewebe eine Maschenweite von Dw = 0,06 - 0,2 mm, so daß diese in der Lage sind, ein Gemisch aus Mittel- und Feinsand aufzuhalten, der dann wiederum die Schluff- und Tonanteile zurückhält. Die Öffnungsweite wird im Einzelfall überprüft und auf den verwendeten Fließboden abgestimmt.

Der Einbau der Textilgewebematte erfolgt in die Abdichtungsschicht, und zwar besonders bevorzugt in die Zugzone. Das bedeutet, daß bei den häufiger zu erwartenden Setzungen der Einbau der Textilgewebemate im unteren Drittel der Abdichtungsschicht (Muldenlage), und bei den weniger häufig zu erwartenden Aufwölbungen der einbau der Textilgewebematte in das obere Drittel der Abdichtungsschicht (Sattellage) erfolgt, wobei ggfs. Einbauüberlappungen vorgenommen werden.

Um eine verbesserte Haftung zwischen der Textilgewebematte und den Abdichtungslagen der Abdichtungsschicht zu erreichen und um eine Längsdränierung innerhalb der Textilgewebematte in der mineralischen Dichtungsschicht zu verhindern, wird vorzugsweise zunächst bindiger Boden, z. B. Ton oder Schluff erdfeucht in die Textilgewebematte eingearbeitet. Dies erfolgt durch Wasseranreicherung im Bereich der Auflage und der überdeckenden Lage und zusätzlich durch intensives Walzen und Verdichtet Der Wassergehalt der einzuarbeitenden bindigen Böden sollte im nassen Bereich der Proctordichte von 93 - 92 % liegen.

Es wurde gefunden, daß die Vorteile der Verwendung einer Textilgewebematte (Aufnahme von Zugkräften durch die Textilgewebematte und damit Herabsetzung der Rißneigung) in der Praxis deshalb nicht optimal genutzt werden können, weil die Haftfestigkeit zwischen Textilgewebematte und Dichtungsschichtmaterial bei nasser Einbettung geringer ist als die Kraft, die zum Abscheren des Abdichtungsbodens erforderlich ist. Dies wurde durch umfangreiche Laborversuche ermittelt. In einer besonders bevorzugten Ausführungsform des Verfahrens der Erfindung ist deshalb eine besondere Verfahrensstufe im Bereich der Einbettungszone der Textilgewebematte vorgesehen. Hierbei wird auf eine Abdichtungslage einer Abdichtungsschicht pulverförmiges Wasserglas eingebracht. Dies kann entweder so erfolgen, daß man pulverförmiges Wasserglas auf die Abdichtungslage aufstreut und mittels Bodenfräse einarbeitet, z. B. auf eine Tiefe von einigen cm, z. B. 5 - 10 cm, oder indem man pulverförmiges Wasserglas mit Abdichtungsboden, z. B. in einem Zwangsmischer, vormischt und die Vormischung profilgerecht aufbringt. Das pulverförmige Wasserglas wird vorzugsweise in einer Menge von 0,4 - 2,0 kg/m$^2$ verwendet. Vorzugsweise finden Natron-Wassergläser Verwendung. Geeignete Handelsprodukte sind Portil und Deposil N. Das für die Abbindung erforderliche Wasser wird durch Aufsprühen aufgebracht. Bei Anwendung der Vormischtechnik läßt sich der Wassergehalt im Mischer genau regeln.

Nach dem Auflegen der Textilgewebematte erfolgt dann Besprühen mit einer wässrigen Lösung, die als Geliermittel für Wasserglas (vom Bodenwasser mehr oder weniger gelöst) eine oder mehrere Komponenten aus der Gruppe Aldehyde, Amide, Ester und Trialkoxysilane enthält. Das System Wasserglas/Trialkoxysilane ist z. B. in der DE-PS 31 51 680 und der DE-OS 33 13 034 beschrieben, wobei dort allerdings Wasserglaslösungen verwendet werden. Auch das in der Dichtwandbauweise bekannte Abdichtungs-und Injektionsmittel Dynagrout® ist für diese Zwecke geeignet. Geeignete Wasserglas-Gelbildner-Systeme, die Aldehyde, Amide bzw. Ester enthalten, sind, mit Bezug auf weiterer Stand der Technik, auf Seite 2 der DE-PS 31 51 680 beschrieben. Mit den genannten Systemen kann die Verarbeitungszeit, d. h. die Zeit bis zum Beginn einer merklichen Veränderung (Topfzeit), ggfs. unter Verwendung geeigneter Gelzeitregler (vgl. DE-PS 31 51 680 und EP-B-0 141 039) auf die Zeit ausgedehnt werden, die bei der Durchführung des Verfahrens in der Praxis erforderlich ist. Die Verwendung von Wasserglaslösungen ist ebenfalls möglich, jedoch wegen der zu beachtenden verarbeitungstechnischen Besonderheiten weniger bevorzugt. Die Verwendung von pulverförmigem Wasserglas anstelle von Wasserglaslösungen bringt einerseits den Vorteil einer besseren Bodenverarbeitbarkeit (wegen des geringeren Wassergehalts des Bodens) mit sich. Andererseits ist wegen der Langsamkeit der Reaktion des pulverförmigen Wasserglasses mit der Bodenfeuchtigkeit eine lange Verarbeitungszeit, z. B. von 1 - 3 Tagen gegeben, so daß die Erdbauarbeiten abgeschlossen sind, bevor die eigentliche Gelbildung stattfindet und dann ungestört und somit optimal vonstatten gehen kann.

Anschließend wird die beschriebene Maßnahme der Anwendung des Systems Wasserglas/Gelbildner von der anderen Seite her wiederholt, d. h. auf die aufgelegte Geotextilgewebematte wird ein mit pulverförmigem Wasserglas vorgemischter Abdichtungsboden in entsprechender Schichtstärke aufgebracht und dann mit der Gelbildnerlösung besprüht. Ein nachträgliches Einfräsen von Wasserglas in eine zuvor aufgebrachte Bodenschicht ist auf der Oberseite der Geotextilgewebematte kaum möglich.

Wegen der Möglichkeit, mit den angegebenen Gelbildnern die Topfzeit entsprechend lang einzustellen, kann man den Gelbildner auch gleich zusammen mit dem Wasserglas in den Abdichtungsboden einmischen.

Ebenso wie bei der Arbeitsweise ohne Bewehrung mit einer Geotexilgewebematte, werden die einzelnen Lagen der Abdichtungsschicht üblicherweise mit herkömmlichen Erdbaugeräten verdichtet bzw. angewalzt.

Es wurde gefunden, daß durch Anwendung der vorstehend beschriebenen Haftungsverbesserung die Werte für die Haftung zwischen Textilgewebematte und Dichtungsschichtmaterial auf das doppelte bis dreifache erhöht werden können, was eine entsprechende Verbesserung in der Aufnahme der Zugspannungen mit sich bringt. Dies wiederum äußert sich in einer starken Herabsetzung der Rißneigung, und zwar sowohl der Zahl als auch der Größe der Risse nach. Ein weiterer Vorteil der beschriebenen Haltungsverbesserung liegt darin, daß auch die Durchlässigkeitsbeiwerte der Dichtungsschicht, die ein Gütemaß für die Abdichtungsschicht darstellen, um 1/3 bis 1/2 Zehnerpotenz verbessert werden.

Im folgenden wird die Erfindung anhand von Versuchen erläutert.

1. Untersuchung des Rißverhaltens von Abdichtungen nach dem Stand der Technik

Auf einem setzungsempfindlichen, locker gelagerten Untergrund wurde ein Teich mit einer einlagigen Dichtungsschicht aus Lehm und Bentonit und tonhaltigem Lehm und Lehm unter Zusatz von Wasserglas hergestellt. Der Abdichtungsschicht wurde zum Schutz gegen Austrocknung und gegen Erosion Mittel- bis Grobkies aufgelagert. Einige Wochen hielt der Teich den Wasserspiegel (h = 1,5 m). Plötzlich wurde jedoch ein starker Abfall des Wasserspiegels, etwa auf halbe Wasserstauhöhe, beobachtet. Durch Aufgrabungen der Schutzschicht wurde festgestellt, daß im aufgeschütteten Dammbereich des Teiches (der Teich lag in einem flachen Hang, so daß eine Dammschüttung talseitig erforderlich war) Risse und trichterförmige Durchbrüche entstanden waren, durch die das Wasser in den darunterliegenden, gemischtkörnigen, durchsickerungsfähigen Boden (verlehmter Tonstein) ablaufen konnte. Es wurden Risse in einer Breite von < 1,0 cm festgestellt. Im Bereich der Durchbrüche entstanden trichterförmige Ausspülungen. Diese Ausspülungen wurden verstopft, die Risse jedoch belassen und wieder mit Kies überdeckt. Der Teich wurde ständig geflutet, um durch permanente Versickerung des Teichwassers zu beobachten, inwieweit ein Abdichtungseffekt durch Einschlämmung in den Rissen auftrat. Über 4 Jahre wurde beobachtet, daß ein Zusetzen der Risse nicht stattfand. Vielmehr entstanden Ausspülungen, in denen das Wasser nach mehreren Wochen in größerer Geschwindigkeit versickerte. Die Risse wurden wieder verstopft und neue Wasserfüllungen vorgenommen. Die ständigen Wasserspiegelschwankungen bewirkten kein Zusetzen von feinen Rissen oder Spalten Hierbei sei erwähnt, daß im Bereich der Risse die mineralische Abdichtungsschicht aus den oben genannten Materialien eine steife Zustandsform auch unter Wasser besaß und keine Tendenz zu Fließerscheinungen aufwies.

Nach 3 Jahren Versuchszeit waren die Risse bis zur Teichsohle eingeschnitten. Über einen Zeitraum von einem Jahr konnte nur noch ein Wasserstau von etwa 10 bis 20 cm beobachtet werden. Nach 4 Jahren wurde erstmals das Trockenfallen des Teiches bis in den Sohlenbereich beobachtet.

Diese Versuche zeigen, daß gerissene mineralische Abdichtungen sich nicht "selbstheilend" zusetzen, auch wenn sie mit Filterschichten überdeckt sind. Vielmehr tritt eine Vergrößerung der Risse durch ablaufendes Niederschlagswasser ein.

Weiterhin wurde festgestellt, daß selbst durch die Auflagerung eines Flächenfilters aus Grobkies bei Wassertransport so gut wie keine Schluffanteile aus der mineralischen Abdichtungsschicht ausgeschwemmt wurden.

2. Rißverhalten bei einer erfindungsgemäßen Abdichtung (Selbstreparatur)

In einem Durchlässigkeitsgerät h = 15 cm mit einem $\phi$ von 10 cm wurde eine künstlich gerissene Dichtungsschicht mit eingelegter Bewehrung (Textilgewebematte) eingebaut und mit einer Filterschicht aus Kiessand überdeckt. Die Durchlässigkeitswerte lagen anfangs bei $1 \times 10^{-4}$ m/s. Dies entspricht nahezu dem Wert des Kiesfilters. Sie veränderten sich bis auf $1 \times 10^{-5}$ bis $1 \times 10^{-6}$ m/s je nach Rißbreite, die 0,5 bis 1,2 cm betrug. Trotz ständigem Überstau wurde ein Zusetzen der Risse nicht bewirkt. In weiteren Versuchen wurde der gleichen gerissenen Dichtungsschicht ein Fließboden, bestehend aus, jeweils in Gew.-%, 10 % Mittelsand, 30 - 40 % Feinsand, 30 - 40 % Schluff und 10 - 20 % nichtaktivem Tonmehl, der Dichtungsschicht 5 cm hoch überlagert und mit Filtermaterial (Kiessand) gering überdeckt. Durch ständigen Aufstau wurde bereits nach 2 Tagen ein Wert von $< 1 \times 10^{-8}$ und nach einer Woche ein Werte von $2 \times 10^{-9}$ bis $8,5 \times 10^{-10}$ m/s gemessen. Die Versuchsreihen zeigen, daß durch Überlagerung von gerissenen Dichtungsschichten mit fließenden Bodenarten durch Ausfließen des Wassers die Risse sich mit dem Fließboden zusetzen. Der Fließboden wird mit dem Wasser in die Risse transportiert und kann hier je nach Wasserüberstau sedimentieren. Eine Barriere für den Fließbodenbildet die eingelegte Geotextilgewebematte, die Mittel- bis Feinsand aufhält, so daß die Feinstanteile Schluff und Ton nicht ausgespült werden können.

Diese Versuche zeigen, daß die Möglichkeit besteht, mineralische Dichtungsschichten so herzustellen, daß sie trotz unterschiedlicher Verformungen und der damit verbundenen Rißbildungen ihre abdichtende Wirkung auf Dauer durch Zusetzen der Risse mit Fließboden behalten. Die Bewehrung der Dichtungsschicht begünstigt die abdichtende Eigenschaft bei größeren Setzungen und Sackungen, da das Rißverhalten stark reduziert wird. Hierdurch wird erreicht, daß der auf der mineralischen Abdichtungsschicht aufgelagerte Fließboden nur in begrenzter und geringer Menge zur Verfügung stehen muß, um in der Lage zu sein, durch Ausspülung geringer Mengen die Risse wieder zuzusetzen. Um den Fließboden an jeder beliebigen Stelle verfügbar zu machen, ist er vollflächig auf die mineralische Dichtungsschicht, jedoch in geringer Höhe je nach Rißgefährdung 3 bis 10 cm hoch aufzutragen. Die Bewehrung sollte im unteren oder oberen Drittel der Dichtungsschicht, aber immer in der Zugzone, liegen.

3. Zugversuche an im bindigen Boden eingebetteten Geotextilien (Einbettung einer Textilgewebematte in die Dichtungsschicht mittels Wasserglas/Gelbildner

Bei nasser Einbettung in Auelehm wurde die Textilgewebematte an unbehinderter Seitenfläche herausgezogen. Der Dichtungsboden haftete nur teilweise an der Geotextilgewebematte. Bei der Einbettung mit Wasserglas und gelbildenden Substanzen, wie vorstehnd beschrieben, wurde bei allen Zugversuchen nach einer ausreichenden Abbindephase von 3 bis 4 Tagen mit der Geotextilgewebematte ein flacher Bodenkeil aus der Dichtungsschicht herausgezogen. Dies zeigt, daß die Haftungskräfte zwischen dem bindigen Boden und der Geotextilgewebematte größer sind als die Kräfte, die in der Lage sind, einen bindigen Boden abzuscheren.

Auf einer gelochten, flexiblen Unterlage wurde eine Dichtungsschicht aus Auelehm 20 cm dick aufgebaut und verdichtet. Die Unterlageplatte wurde an den Schmalseiten gehalten. Danach wurde in der Mitte eine Anhebung der Dichtungsschicht um 5 bis 12 cm vorgenommen. Die Anhebung verursachte je nach Hebungsgeschwindigkeit ein bis drei durchgehende klaffende Risse in der Dichtungsschicht. Bei eingelegter Bewehrung, etwa in der Mitte und im oberen Drittel der Dichtungsschicht im Bereich der Zugzone und Verwendung eines Wasserglas/Gelbildner-Systems (Einbettungszone beidseitig der Textilgewebematte jeweils 3 - 4 cm), wie vorstehend beschrieben, wurden bei gleicher und größerer Hebung bis zu 15 cm keine durchgehenden Risse beobachtet. Es entstand eine Vielzahl kleiner Rißbildungen an der Oberfläche der Dichtung, die jedoch nicht durchgehend bis zur Bewehrung verliefen.

Aufgrund des hochscherfesten Verbundes zwischen der Geotextilgewebematte und dem bindigen Boden durch die Einbringung der Wasserglas/Gelbildner-Einbettungszone werden die Zugkräfte innerhalb der Dichtungsschicht gleichbleibend über die gesamte Fläche verteilt, was auch die Verringerung und die Verteilung der Risse bewirkt. Der Einbau einer Geotextilgewebematte unter der mineralischen Abdichtungsschicht bildet keine ausreichende Barriere, weil durch Untergrundabsenkungen unterhalb der mineralischen Abdichtungsschicht horizontal verlaufende Hohllagen in großer Flächenausdehnung entstehen, die durch Selbstreparatur, durch Einschlämmen nicht voll zugesetzt werden können. Weiterhin ergibt sich auch keine Verminderung der Rißneigung in der mineralischen Dichtungsschicht.

**Patentansprüche**

1. Verfahren zur Herstellung einer Abdichtung, z. B. bei Deponien oder Altlastflächen, wobei auf den abzudichtenden Untergrund ein oder mehrere Lagen als Abdichtungsschicht aufgebracht werden, **dadurch gekennzeichnet,** daß man auf die Oberfläche der Abdichtungschicht eine weitere Schicht aus einem Boden mit einer breiten Korngrößenverteilung aufbringt, der unter Wasserzufuhr Eigenschaften einer fließenden Bodenart der Klasse 2 nach DIN 18300 annimmt (Fließboden), und in die Abdichtungsschicht eine Geotextilgewebematte mit einer Maschenweite, die Korngrößen ab Feinsandbestandteil und gröber des Fließbodens zurückhält, einbaut.

2. Verfahren nach Anspruch 1, dadurch gekennzeichnet, daß man die aufgebrachten Bodenmaterial-Lagen mechanisch verdichtet.

3. Verfahren nach Anspruch 1 oder 2, dadurch gekennzeichnet, daß man dem Fließboden nicht-quellende Tonmineralien in einer Menge von 3- 10 Gew.% einverleibt.

4. Verfahren nach einem der vorhergehenden Ansprüche, dadurch gekennzeichnet, daß man einen Fließboden mit folgender Zusammensetzung verwendet:

| Bestandteil | Gew.-% | Korngröße, mm |
|---|---|---|
| Ton | 5 - 15 | 0,001 - 0,002 |
| Schluff | 35 - 25 | 0,002 - 0,063 |
| Feinsand | 45 - 55 | 0,063 - 0,2 |
| Mittelland und Grobsand | 15 - 5 | 0,2 - 1,0 |

5. Verfahren nach einem der vorhergehenden Ansprüche, dadurch gekennzeichnet, daß man einen Fließboden verwendet, dessen Wassergehalt im trockenen Bereich der Proctorkurve des Fließbodengemisches liegt.

6. Verfahren nach einem der vorhergehenden Ansprüche, dadurch gekennzeichnet, daß man den Fließboden mit einer Dicke von 5 - 10 cm aufbringt.

7. Verfahren nach einem der vorhergehenden Ansprüche, dadurch gekennzeichnet, daß man den Fließboden von einer Filterschicht überlagert.

8. Verfahren nach Anspruch 7, dadurch gekennzeichnet, daß man die Filterschicht von einer Kulturbodenschicht überlagert.

9. Verfahren nach einem der vorhergehenden Ansprüche, dadurch gekennzeichnet, daß man die Geotextilgewebematte in die Zugzone der Abdichtungsschicht einbaut.

10. Verfahren nach Anspruch 9, dadurch gekennzeichnet, daß man in eine Einbettungszone der Geotextilgewebematte pulverförmiges Wasserglas einbringt, das mit einem Gelbildner zur Reaktion gebracht wird.

11. Verfahren nach Anspruch 10, dadurch gekennzeichnet, daß man die Einbettungszone mit einer Dicke von 5 - 10 cm, jeweils zu beiden Seiten der Geotextilgewebematte vorsieht.

12. Verfahren nach Anspruch 10 oder 11, dadurch gekennzeichnet, daß man als Gelbildner Aldehyde, Amide, Ester oder Trialkoxysilane verwendet.

13. Verfahren zur Herstellung einer Dichtung mit einer mineralischen Abdichtungsschicht, wobei die Dichtung eine Geotextilmatte aufweist, dadurch gekennzeichnet, daß man in die mineralische Abdichtungsschicht der Dichtung eine Geotextilgewebematte einbaut.

14. Verfahren nach Anspruch 13, dadurch gekennzeichnet, daß man die Geotextilgewebematte in die Zugzone der Abdichtungsschicht einbaut.

15. Verfahren nach Anspruch 13 oder 14, dadurch gekennzeichnet, daß man die Geotextilgewebematte mit einer sich beidseitig der Geotextilgewebematte erstreckenden Einbettungszone einbaut, wobei in die Einbettungszone ein Wasserglas/Gelbildner-System eingebracht wird.

16. Verfahren nach einem der Anspüche 13 - 15, dadurch gekennzeichnet, daß man als Gelbildner Aldehyde, Amide, Ester oder Trialkoxysilane verwendet.

17. Verfahren nach einem der Ansprüche 13 - 16, dadurch gekennzeichnet, daß man die Einbettungszone mit einer Dicke von 5 bis 10 cm, jeweils zu beiden Seiten der Geotextilgewebematte, vorsieht.

**Claims**

1. A process for producing a sealing, for example for waste dumps or old sources of pollution, wherein one or more layers of soil are applied to the subsurface to be sealed as a sealing layer, characterized in that one applies to the surface of said sealing layer a further layer of a soil having a broad grain size distribution which, under the influence of water, becomes a flowing soil of Class 2 in accordance with DIN 18300 (flowable soil), and that one installs into said sealing layer a geotextile woven mat having a mesh size retaining a grain size as of fine sand constituent and coarser of said flowable soil.

2.  The process of claim 1, characterized in that the applied layers of soil material are mechanically compacted.

3.  The process of claim 1 or 2, characterized in that non-swelling clay minerals are added to said flowable soil in an amount from 3 to 10 wt%.

4.  The process of any of the preceding claims, characterized by using a flowable soil having the following composition:

| Component | Weight % | Grain Size, mm |
|---|---|---|
| Clay | 5 - 15 | 0.001 - 0.002 |
| Silt | 35 - 25 | 0.002 - 0.063 |
| Fine Sand | 45 - 55 | 0.063 - 0.2 |
| Medium and Coarse Sand | 15 - 5 | 0.2 - 1.0 |

5.  The process of any of the preceding claims, characterized by using a flowable soil the water content of which is in the dry range of the proctor curve of the flowable soil mixture.

6.  The process of any of the preceding claims, characterized in that the flowable soil is applied with a thickness of 5 to 10 cm.

7.  The process of any of the preceding claims, characterized in that a filter layer is installed on top of the flowable soil.

8.  The process of claim 7, characterized in that a cultivation soil layer is installed on top of said filter layer.

9.  The process of any of the preceding claims, characterized in that said geotextile woven mat is installed in the stress zone of the sealing layer.

10. The process of claim 9, characterized in that powdered water glass is added into an embedding zone of the geotextile woven mat, which is reacted with a gel-forming agent.

11. The process of claim 10, characterized in that said embedding zone is provided with a thickness of 5 to 10 cm on each of the geotextile woven mat.

12. The process of claim 10 or 11, characterized in that aldehydes, amides, esters or trialkoxysilanes are used as said gel-forming agent.

13. A process for producing a sealing having a mineralic sealing layer, wherein said sealing includes a geotextile mat, characterized by installing into said mineralic sealing layer of the sealing a geotextile woven mat.

14. The process of claim 13, characterized in that said geotextile woven mat is installed into the stress zone of said sealing layer.

15. The process of claim 13 or 14, characterized in that said geotextile woven mat is installed with an embedding zone extending to both sides of said geotextile woven mat, wherein a water glass/gel-forming agent system is added to said embedding zone.

16. The process of any of claims 13 to 15, characterized in that aldehydes, amides, esters or trialkoxysilanes are used as said gel-forming agent .

17. The process of any of claims 13 to 16, characterized in that said embedding zone is provided with a thickness of 5 to 10 cm on each side of the geotextile woven mat.

**Revendications**

**1.** Procédé d'étanchéification, par exemple dans des décharges ou des surfaces de dépôts de déchets, dans lequel une ou plusieurs couches sont déposées comme couches étanches sur le sol devant être étanché,
**caractérisé** en ce que
l'on dépose une couche supplémentaire d'un sol ayant une large répartition granulométrique sur la surface de la couche étanche, qui sous l'apport d'eau possède les caractéristiques d'un type de sol boulant de la Classe 2 selon la DIN 18300 (sol boulant), et en ce que dans la couche étanche l'on installe un géo-mat tissé de textile avec une ouverture de maille, qui retient des dimensions de grains du sol boulant à partir de composants de sable fin et plus gros.

**2.** Procédé selon la revendication 1, caractérisé en ce que l'on compresse mécaniquement les couches des matériaux de sol déposées.

**3.** Procédé selon la revendication 1 ou 2, caractérisé en ce que l'on incorpore des minéraux d'argile réfractaire non-gonflants dans le sol boulant selon une quantité de 3-10 % en poids.

**4.** Procédé selon l'une des revendications précédentes, caractérisé en ce que l'on utilise un sol boulant ayant la composition suivante:

| Composant | % en poids | grosseur de grain, mm |
|---|---|---|
| argile | 5 - 15 | 0,001 - 0,002 |
| ardoise grosse | 35 - 25 | 0,002 - 0,063 |
| sable fin | 45 - 55 | 0,063 - 0,2 |
| sable moyen et sable en gros grains | 15 - 5 | 0,2 - 1,0 |

**5.** Procédé selon l'une des revendications précédentes, caractérisé en ce que l'on utilise un sol boulant, dont la teneur d'eau se trouve dans la zone sèche de la courbe Proctor du mélange de sol boulant.

**6.** Procédé selon l'une des revendications précédentes, caractérisé en ce que l'on dépose un sol boulant ayant un épaisseur de 5 à 10 cm.

**7.** Procédé selon une des revendications précédentes, caractérisé en ce que l'on recouvre le sol boulant d'une couche filtrante.

**8.** Procédé selon la revendication 7, caractérisé en ce que l'on recouvre la couche filtrante d'une couche de sol cultivé.

**9.** Procédé selon l'une des revendications précédentes, caractérisé en ce que l'on installe le géo-mat tissé de textile dans la zone tendue de la couche étanche.

**10.** Procédé selon la revendication 9, caractérisé en ce que l'on ajoute du verte soluble sous forme de poudre dans la zone d'enrobage du géo-mat tissé de textile, qui est amené a produire une réaction avec un gélifiant.

**11.** Procédé selon la revendication 10, caractérisé en ce que l'on prévoit la zone d'enrobage ayant une épaisseur de 5 à 10 cm de chaque côté du géo-mat tissé de textile.

**12.** Procédé selon la revendication 10 ou 11, caractérisé en ce que l'on utilise de l'aldéhyde, de l'amide, de l'ester ou du trialcoxysilane comme gélifiant.

**13.** Procédé de fabrication d'un étanchement avec une couche étanche minérale, l'étanchement ayant un géo-mat de textile, caractérisé ce que l'on installe un géo-mat tissé de textile dans la couche étanche minérale de l'étanchement.

14. Procédé selon la revendication 13, caractérisé en ce que l'on installe le géo-mat tissé de textile dans la zone tendue de la couche étanche.

15. Procédé selon la revendication 13, caractérisé en ce que l'on installe le géo-mat tissé de textile avec une zone d'enrobage qui s'étend de chaque côté du géo-mat tissé de textile, un système d'eau soluble/gélifiant étant incorporé dans la zone d'enrobage.

16. Procédé selon l'une des revendications 13 à 15, caractérisé en ce que l'on utilise de l'aldéhyde, de l'amide, de l'ester ou du trialcoxysilane comme gélifiant.

17. Procédé selon l'une des revendication 13 à 16, caractérisé en ce que l'on prévoit la zone d'enrobage avec une épaisseur de 5 à 10 cm de chaque côté du géo-mat tissé de textile.